# FASCICULE DE BREVET EUROPEEN

(11) **EP 1 449 287 B1**
(45) Date de publication et mention de la délivrance du brevet: **19.03.2014**
(21) Numéro de dépôt: 02785562.6
(22) Date de dépôt: 30.10.2002
(51) Int. Cl.: H01H 89/06, H02H 3/05, H01H 73/00

(54) **MODULE DE COMMANDE ET DE PROTECTION D'UN APPAREIL INTERRUPTEUR**
STEUER UND SCHUTZMODUL EINES SCHALTGERÄTS
CONTROL AND PROTECTION MODULE OF A SWITCH APPARATUS

(30) Priorité: 16.11.2001 FR 0114879
(43) Date de publication de la demande: 25.08.2004
(73) Titulaire: Schneider Electric Industries SAS, 92500 Rueil-Malmaison (FR)
(72) Inventeur: CUNY, Jean-Christophe, F-92240 Malakoff (FR); GUIBERT, Philippe, F-78400 Chatou (FR); BAURAND, Gilles, F-78360 Montesson La Borde (FR)
(86) Numéro de dépôt international: PCT/FR2002/003729
(87) Numéro de publication internationale: WO 2003/043156

(56) Documents cités:
- WO-A-01/27958
- US-A- 5 774 319

## Description

La présente invention se rapporte à un module de commande et de protection pour un appareil électrique interrupteur basse tension, tel qu'un contacteur-disjoncteur. Ce module de commande et de protection assure le pilotage d'un électroaimant de commande et d'un déclencheur qui sont aptes à ouvrir ou fermer les pôles de puissance de l'appareil électrique interrupteur. L'invention se rapporte également à un appareil électrique interrupteur connectable à un tel module de commande et de protection.

Un contacteur-disjoncteur est un appareil électrique multipolaire utilisé pour la commande et la protection d'une charge électrique telle qu'un moteur. Il permet d'une part de commander de façon volontaire, au moyen d'un électroaimant de commande propre à la partie "contacteur", l'alimentation et la coupure de conducteurs de puissance reliés à la charge. Il permet d'autre part de commander automatiquement, au moyen d'un mécanisme de déclenchement électromagnétique, appelé ci-après déclencheur, propre à la partie "disjoncteur", la coupure des conducteurs de puissance dès qu'un défaut électrique, tel qu'un défaut de surcharge thermique, de surcharge magnétique ou de court-circuit, apparaît sur au moins l'un des conducteurs.

Dans un tel appareil, les pôles de puissance sont munis de contacts fixes et mobiles à l'intérieur de chambres de coupure. L'électroaimant de commande sollicite un organe multipolaire pour agir sur les contacts mobiles afin d'ouvrir ou de fermer les pôles de puissance en réponse à une commande provenant d'un dispositif de commande. Le déclencheur sollicite également l'organe multipolaire pour agir sur les contacts mobiles afin d'ouvrir les pôles de puissance en réponse à la détection d'un défaut électrique provenant d'un dispositif de protection. Le déclencheur peut être réarmé par un organe de commande manuelle lui-même capable de solliciter l'organe multipolaire pour assurer l'ouverture des contacts mobiles.

Le document EP 366 519 décrit ainsi un contacteur-disjoncteur du type rappelé ci-dessus. Le dispositif de protection est essentiellement mécanique, ce qui nécessite un grand nombre d'appareils pour couvrir comme il est nécessaire toute une gamme voulue de tensions et de courants de puissance. Dans le document FR 2 759 489, l'électroaimant d'un contacteur-disjoncteur assure la commutation des contacts

Le document WO01/27958 décrit un contacteur-disjoncteur dont les conducteurs de puissance, les contacts fixes et mobiles, l'électroaimant de commande et le déclencheur sont logés dans une embase de l'appareil. L'embase est raccordée à un dispositif électronique de commande et de protection qui se présente avantageusement sous forme d'un module amovible rapporté de manière interchangeable à l'embase. Cette disposition permet, pour une même embase, de recevoir différents calibres de modules de protection, diminuant ainsi les différentes combinaisons nécessaires pour couvrir toute une gamme de produits. De plus, cette disposition permet une personnalisation du contacteur-disjoncteur au dernier moment par l'utilisateur, après câblage de la partie puissance.

**Le document** US5774319 **décrit un système interrupteur comportant un contacteur et un relais thermique autoalimenté qui est capable de déclencher la bobine du contacteur en cas de surintensité. Le système comporte un dispositif permettant d'éviter un déclenchement lorsque le relais thermique n'est pas suffisamment alimenté.**

Cependant, il faut garantir en permanence la sécurité de fonctionnement des différents organes assurant la commande et la protection dans ce type d'appareil interrupteur. C'est pourquoi, un premier but de la présente invention est d'augmenter la sécurité de fonctionnement d'un contacteur-disjoncteur en mettant en oeuvre des asservissements entre la commande de l'électroaimant et la commande du déclencheur, offrant ainsi une redondance des fonctions de sûreté grâce à l'utilisation de moyens électroniques de traitement centraux chargés de piloter et contrôler à la fois l'électroaimant et le déclencheur.

Pour cela, l'invention décrit un module de commande et de protection pour un appareil interrupteur multipolaire basse tension destiné à la commande et la protection d'une charge électrique. L'appareil interrupteur comporte une embase qui intègre des lignes de courant munis de contacts fixes et mobiles, un électroaimant de commande et un déclencheur aptes à agir sur lesdits contacts mobiles pour ouvrir ou fermer les pôles de puissance. Le module de commande et de protection comprend, dans un boîtier raccordé de façon amovible à l'embase, des capteurs de courant mesurant l'intensité du courant traversant lesdites lignes de courant et une carte électronique dotée d'une unité de traitement et comportant un dispositif électronique de commande et un dispositif électronique de protection chargés d'actionner respectivement, au travers d'un bornier de contrôle, l'électroaimant de commande et le déclencheur en réponse respectivement à un signal de commande et à un signal de déclenchement émis par l'unité de traitement. Le module se caractérise par le fait que l'unité de traitement est susceptible de supprimer le signal de commande de l'électroaimant en cas de dysfonctionnement du dispositif de protection.

Le dispositif électronique de protection comprend des moyens de stockage d'énergie permettant de stocker une énergie électrique au moins égale à un niveau suffisant pour actionner le déclencheur. Selon une caractéristique, l'unité de traitement supprime le signal de commande de l'électroaimant quand l'énergie électrique stockée dans les moyens de stockage est inférieure audit niveau. L'unité de traitement supprime également le signal de commande de l'électroaimant quand un défaut de connexion est détecté entre le dispositif électronique de protection et le déclencheur.

Par ailleurs, l'invention a également pour but d'optimiser la disposition d'un tel contacteur-disjoncteur pour simplifier la mise en place du module de protection, simplifier son réglage par un utilisateur, minimiser le nombre de composants utilisés pour sa fabrication et pour fiabiliser les connexions entre embase et module de protection.

Selon une autre caractéristique, la carte électronique est agencée de façon à recevoir directement les capteurs de courant, le bornier de contrôle et des moyens de dialogue opérateur situés sur une face avant du boîtier. Ces moyens de dialogue opérateur comprennent un organe de sélection d'un paramètre de réglage unique et l'unité de traitement possède des moyens de calcul pour déterminer, à partir dudit paramètre de réglage, une valeur de seuil de déclenchement sur défaut thermique et une valeur de seuil de déclenchement sur défaut magnétique.

L'invention concerne également un appareil électrique interrupteur multipolaire destiné à la commande et la protection d'une charge électrique, comportant une embase qui intègre des lignes de courant munis de contacts fixes et mobiles, un électroaimant de commande et un déclencheur aptes à agir sur lesdits contacts mobiles. L'appareil électrique est caractérisé par le fait que l'embase est raccordée à un tel module de commande et de protection.

D'autres caractéristiques et avantages vont apparaître dans la description détaillée qui suit en se référant à un mode de réalisation donné à titre d'exemple et représenté par les dessins annexés sur lesquels :
- la figure 1 représente un schéma fonctionnel d'un module de commande et de protection conforme à l'invention,
- la figure 2 montre une structure simplifiée d'un module de commande et de protection monté sur l'embase d'un appareil interrupteur,
- la figure 3 reprend la figure 2 avec le bouton de commande manuelle dans une autre position.

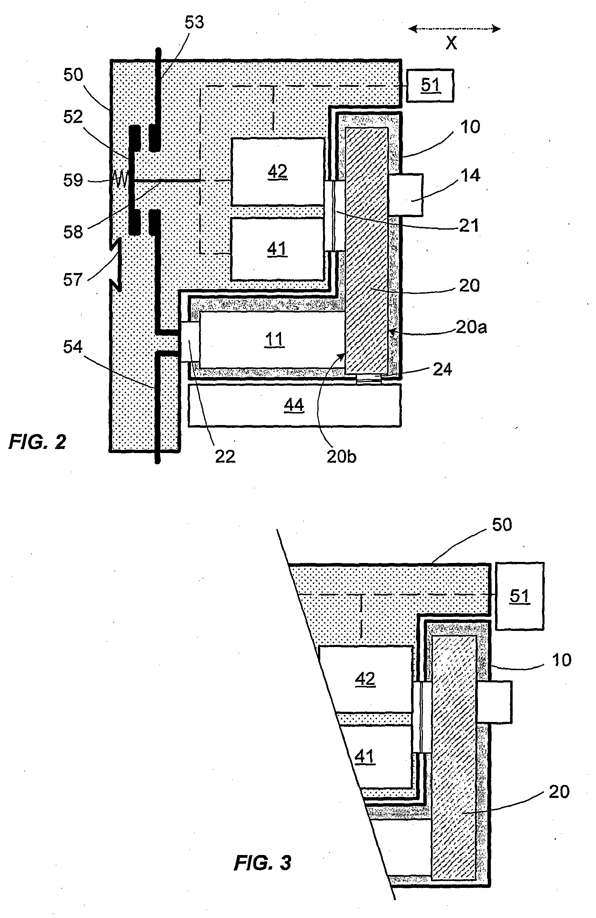

En référence à la figure 2, un appareil interrupteur multipolaire du type contacteur-disjoncteur, contacteur-disjoncteur inverseur ou démarreur, comporte une embase 50 à laquelle un module de commande et de protection 10 interchangeable et amovible peut venir se raccorder électriquement. L'embase 50 présente sur sa partie arrière des moyens classiques de fixation 57 à un support, tel qu'un rail normalisé ou une platine porteuse, et loge des pôles de puissance dotés de contacts fixes amont et aval entre des contacts mobiles 52. Les contacts fixes amont sont reliés à des lignes de courant amont 53 (lignes de source) qui établissent la continuité électrique entre le réseau électrique et les pôles de l'appareil interrupteur. Les contacts fixes aval sont reliés à des lignes de courant aval 54 (lignes de charge) qui établissent la continuité électrique entre les pôles de l'appareil interrupteur et une charge électrique, généralement un moteur électrique, que l'on souhaite commander et protéger grâce à l'appareil interrupteur. Les contacts fixes et mobiles sont situés vers l'arrière de l'appareil, comme indiqué en figure 2. Un bornier de puissance 22 est situé sur les lignes de courant aval 54. Ce bornier de puissance 22 permet de raccorder des capteurs de courant 11,12,13 appartenant au module de commande et de protection 10 et destinés à mesurer le courant circulant dans les différents pôles de puissance.

Les contacts mobiles 52 sont dits en position ouverte quand ils sont déconnectés des contacts fixes entraînant ainsi l'ouverture des pôles de puissance. Ils sont dits en position fermée quand ils sont connectés aux contacts fixes entraînant la fermeture des pôles de puissance et donc le passage du courant dans la charge électrique, sous réserve de la continuité du courant dans le bornier de puissance 22. La figure 2 montre les contacts mobiles 52 en position ouverte.

Pour chaque pôle, les contacts mobiles 52 sont disposés sur un pont mobile sollicité à l'ouverture par le déplacement d'un poussoir 58, et à la fermeture par un ressort 59, lorsque le poussoir 58 est libéré, donnant ainsi un fonctionnement généralement appelé "pôle rupteur". Différents organes coopèrent mécaniquement pour provoquer les déplacements du poussoir 58 dans le sens d'ouverture et de fermeture des contacts mobiles 52, au moyen de liaisons mécaniques classiques dont le détail n'est pas représenté dans les présentes figures. Ces différents organes, qui appartiennent à l'embase 50, sont un électroaimant de commande 41, un déclencheur électromagnétique 42 et un bouton de commande manuelle 51. De façon connue, le déclencheur électromagnétique 42 et le bouton de commande manuelle 51 agissent sur les contacts mobiles par l'intermédiaire d'une serrure.

L'électroaimant de commande 41 est de type monostable et possède une bobine alimentée en courant continu. Il commande la fermeture des contacts mobiles 52 quand un courant circule dans sa bobine et l'ouverture des contacts mobiles 52 en l'absence de courant. Le déclencheur électromagnétique 42 est de type bistable à action fugitive et, quand sa bobine est circulée par un courant, il déclenche l'ouverture des contacts mobiles 52 quel que soit l'état de l'électroaimant 41.

Le bouton de commande manuelle 51 est situé sur une face avant de l'embase 50 de façon à être facilement accessible par un opérateur lorsque l'appareil interrupteur est en fonctionnement. Le bouton 51 est susceptible de prendre une position Marche ("ON") et une position Arrêt ("OFF"). La position Arrêt force l'ouverture des contacts mobiles 52 et met l'appareil interrupteur en position de sectionnement. Le passage de la position Arrêt à la position Marche entraîne le réenclenchement du déclencheur 42, la fermeture des contacts mobiles 52 étant alors conditionnée par une commande appropriée de l'électroaimant 41. Le bouton 51 est également susceptible de prendre une troisième position Déclenché ("TRIP") qui est obtenue par l'action du déclencheur 42 pour signaler l'apparition d'un défaut thermique ou magnétique.

Le module de commande et de protection 10 est interchangeable et amovible de l'embase 50. Il est constitué d'un boîtier ayant préférentiellement une forme parallélépipédique avec une section verticale en forme de "L". Le boîtier comporte les capteurs de courant 11,12,13 chargés de mesurer l'intensité du courant circulant dans les lignes de courant aval 54, une carte électronique 20 ainsi que des moyens de dialogue opérateur 14 situés sur la face avant du boîtier, de façon à être facilement accessible par un opérateur.

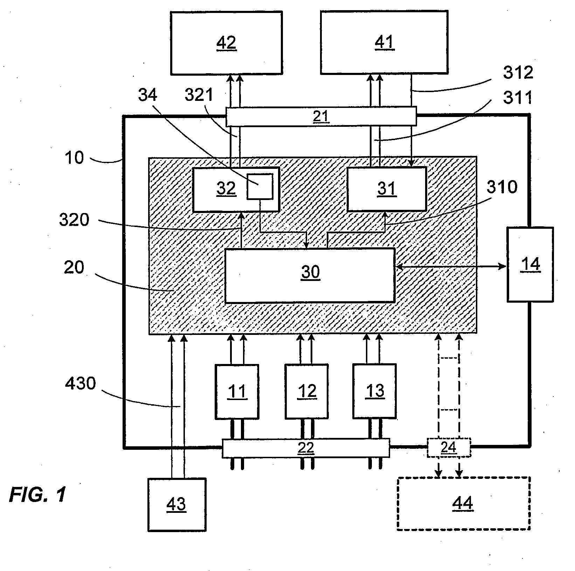

Selon l'invention et en référence à la figure 1, la carte électronique 20 du module de commande et de protection 10 comporte une unité de traitement 30 centrale reliée à un dispositif électronique de commande 31 et à un dispositif électronique de protection 32. Le dispositif électronique de commande 31 est relié à l'électroaimant de commande 41 par une liaison bifilaire 311 polarisée et le dispositif électronique de protection 32 est relié au déclencheur 42 également par une liaison bifilaire 321 polarisée. La carte électronique 20 reçoit un signal d'alimentation électrique 430 provenant d'un module alimentation 43. Dans un mode de réalisation simplifié, ce signal 430 peut être confondu avec l'ordre de Marche/Arrêt (A1,A2) destiné à la commande de l'électroaimant 41. Dans un autre mode de réalisation, l'ordre de Marche/Arrêt de l'électroaimant provient séparément sous forme logique ou via un réseau de communication.

Le dispositif électronique de commande 31 est chargé d'actionner l'électroaimant de commande 41 en réponse à un signal 310 de commande de l'électroaimant émis par l'unité de traitement 30. Pour cela, il effectue les opérations suivantes : à réception du signal 310 de commande, le dispositif de commande 31 évalue le niveau de tension disponible dans l'ordre de Marche/Arrêt reçu. Si ce niveau de tension est supérieur à un niveau dit de "tension de montée", il communique à l'électroaimant 41 l'énergie nécessaire à sa montée (énergie d'appel) par la liaison 311, entraînant ainsi la fermeture des contacts mobiles 52, puis il lui communique l'énergie nécessaire au maintien (énergie de maintien qui est généralement inférieure à l'énergie d'appel). Quand le signal 310 de commande disparaît, le dispositif de commande 31 commande la retombée de l'électroaimant 41 par la suppression de l'énergie. Pour des raisons de sécurité, le système décrit présente l'avantage que, comme l'électroaimant 41 est monostable, une déconnexion ou une coupure d'alimentation du module de commande et de protection 10 entraîne automatiquement la retombée de l'électroaimant 41. Par ailleurs, comme détaillé ci-après, le signal 310 de commande de l'électroaimant 41 n'est envoyé qu'après avoir vérifié que l'énergie nécessaire au fonctionnement du déclencheur 42 était suffisante.

Selon un mode de réalisation avantageux, le dispositif électronique de commande 31 peut recevoir de l'embase 50 un signal d'identification 312 de l'électroaimant 41. Ce signal d'identification 312 permet au dispositif électronique de commande 31 de reconnaître le type d'électroaimant présent dans l'embase 50. Dans l'exemple décrit, deux types d'électroaimant peuvent être implantés dans l'embase 50 en fonction du calibre de l'appareil interrupteur. Ces deux types d'électroaimant fonctionnent tous les deux avec une bobine alimentée en courant continu, par exemple 24 Volts, mais dont la consommation électrique est différente. La bobine d'un premier type d'électroaimant consomme environ 200mA, alors que celle d'un second type d'électroaimant ne consomme qu'environ 100mA. Ce second type d'électroaimant est particulièrement adapté pour raccorder de manière économique l'appareil interrupteur directement et sans relayage intermédiaire avec un équipement d'automatisme, tel qu'un automate programmable, dont les sorties compactes en 24 Volts continu ne peuvent généralement pas délivrer plus de 100mA.

Le dispositif électronique de commande 31 est donc capable d'adapter la valeur du courant circulant dans la liaison bifilaire 311 à différentes valeurs en fonction de l'état du signal d'identification 312. Dans un mode de réalisation extrêmement simple, le signal d'identification 312 comprend un seul conducteur qui est soit relié à la borne "plus" de la liaison bifilaire 311 (pour le second type d'électroaimant à consommation électrique réduite), soit déconnecté de toute borne (pour le premier type d'électroaimant). Il est alors facile pour le dispositif de commande 31 de tester la présence d'une tension dans le signal d'identification 312 afin de réguler l'intensité du courant de la liaison bifilaire au niveau souhaité.

La liaison bifilaire 321 pour la commande du déclencheur 42, la liaison bifilaire 311 pour la commande de l'électroaimant 41 et le signal d'identification 312 de l'électroaimant 41 sont transmis entre l'embase 50 et la carte électronique 20 du module 10 au moyen d'un bornier de contrôle 21 unique qui est composé de cinq connecteurs dans l'exemple détaillé (par exemple du type lame de pression).

Le dispositif électronique de protection 32 est chargé d'actionner le déclencheur 42 en réponse à un signal de déclenchement 320 émis par l'unité de traitement 30. Le signal de déclenchement 320 est généré quand l'unité de traitement 30 détermine une situation de défaut sur un ou plusieurs pôles de puissance, notamment de type défaut thermique, défaut magnétique ou défaut de court-circuit, à partir des informations délivrées par les capteurs de courant 11,12,13. Pour assurer le déclenchement du déclencheur 42, le dispositif électronique de protection 32 comprend des moyens de stockage 34 d'énergie permettant de stocker une énergie électrique au moins égale à un niveau déterminé qui est suffisant pour actionner le déclencheur 42. Ces moyens de stockage 34 sont par exemple constitués par une capacité située sur la carte électronique et chargée dès la mise sous tension de la carte électronique 20. A la réception d'un signal de déclenchement 320 émanant de l'unité de traitement 30, l'énergie électrique emmagasinée par cette capacité est alors envoyée par le dispositif électronique de protection 32 sur la liaison bifilaire 321 pour permettre d'actionner très rapidement le déclencheur 42.

Ainsi, grâce à une unité de traitement 30 centralisée, le module de commande et de protection 10 est capable d'actionner à la fois deux actionneurs différents agissant sur les pôles de puissance, à savoir le déclencheur 42 en cas d'une détection d'un défaut sur des pôles de l'appareil interrupteur (fonction disjoncteur) et l'électroaimant de commande 41 pour ouvrir ou fermer les pôles de l'appareil interrupteur sur une commande volontaire (fonction contacteur). Selon un mode de réalisation préférée, l'unité de traitement 30 peut être intégrée dans un composant ASIC monté sur la carte électronique 20.

Cependant, pour garantir une sûreté de fonctionnement optimale, il convient de vérifier notamment que l'appareil interrupteur est toujours en mesure de pouvoir actionner le déclencheur 42. C'est pourquoi, conformément à l'invention, l'unité de traitement 30 exécute une fonction de surveillance afin de surveiller constamment le fonctionnement du dispositif électronique de protection 32. Dès qu'un dysfonctionnement est détecté dans le dispositif électronique de protection 32 par cette fonction de surveillance, l'unité de traitement 30 a la capacité à supprimer le signal de commande 310 afin d'assurer l'ouverture des contacts mobiles 52 de l'appareil interrupteur. On crée ainsi une redondance de la fonction de sécurité appréciable pour l'utilisateur, puisque, grâce à son unité de traitement 30 centralisée, le module de commande et de protection 10 de l'appareil interrupteur protège la charge électrique non seulement des défauts thermiques, magnétiques et de court-circuit en actionnant le déclencheur 42, mais peut se prémunir aussi contre un défaut d'actionnement de ce déclencheur 42 en étant capable de supprimer le signal de commande 310 de l'électroaimant 41.

Différents dysfonctionnements du dispositif électronique de protection 32 sont ainsi détectables par le module de commande et de protection 10. Dans le mode de réalisation présenté, on est notamment capable de contrôler en permanence que le niveau d'énergie stockée dans les moyens de stockage 34 est suffisant et que la connexion électrique entre le dispositif de protection 32 et le déclencheur 42 est correcte.

Pour cela, la fonction de surveillance de l'unité de traitement 30 est capable de mesurer l'énergie électrique emmagasinée dans les moyens de stockage 34 afin de vérifier en permanence que cette énergie électrique est au moins égale à un niveau suffisant pour actionner le déclencheur 42. Si l'énergie électrique emmagasinée dans les moyens de stockage 34 est inférieure à ce niveau, cela signifiera que l'appareil interrupteur n'aura vraisemblablement pas les moyens d'actionner le déclencheur 42 en cas d'apparition d'un défaut thermique ou magnétique, créant ainsi une situation potentiellement dangereuse si les contacts mobiles 52 sont fermés.

De même, la fonction de surveillance de l'unité de traitement 30 vérifie en permanence que la connexion électrique entre le module de commande et de protection 10 et le déclencheur 42 à travers le bornier de contrôle 21 est correcte. Pour cela, le module 10 est par exemple capable de générer un signal de faible amplitude circulant sur la liaison bifilaire 321 en utilisant un petit générateur de courant, ce courant étant suffisant pour tester le bouclage de cette liaison bifilaire 321 mais insuffisant pour actionner le déclencheur 42. Si la liaison bifilaire 321 n'est pas passante (défaut de connexion entre le module de commande et de protection 10 et le déclencheur 42), cela signifiera que l'appareil interrupteur n'aura vraisemblablement pas les moyens d'actionner le déclencheur 42 en cas de défaut thermique, magnétique ou de court-circuit, créant ainsi une situation potentiellement dangereuse si les contacts mobiles 52 sont fermés.

Dans les deux cas de dysfonctionnement cités ci-dessus, grâce à la présente invention, l'unité de traitement 30 est capable de mettre l'appareil interrupteur en position de sécurité en supprimant le signal de commande 310 afin que le dispositif électronique de commande 31 stoppe l'alimentation de l'électroaimant 41 de façon à ouvrir les contacts mobiles 52.

De même, l'unité de traitement 30 n'effectue aucune commande de l'électroaimant 41 par le signal de commande 310, avant de vérifier au préalable :
- que l'énergie électrique emmagasinée dans les moyens de stockage 34 est supérieure ou égale à un niveau suffisant pour actionner le déclencheur 42,
- que la connexion entre le module de commande et de protection 10 et le déclencheur 42 est effective.

Le module de commande et de protection 10 assure ainsi une redondance de la sécurité de l'appareil interrupteur car il diminue considérablement la probabilité d'avoir un appareil interrupteur alimentant une charge et incapable d'assurer ses fonctions de sécurité en cas de défaut thermique, magnétique ou de court-circuit.

Par ailleurs, grâce à son unité de traitement 30 centralisée, le module de commande et de protection 10 peut, en fonction du mode de fonctionnement choisi, gérer de différentes manières l'apparition d'un défaut thermique sur une ou plusieurs lignes de courant. Par exemple, lorsqu'un défaut thermique survient dans un mode de fonctionnement de type automatique, l'unité de traitement 30 est capable de supprimer uniquement le signal de commande 310 de l'électroaimant 41 sans émettre le signal de déclenchement 320 du déclencheur 42. Au bout d'un temps d'arrêt déterminé et si les conditions sont de nouveau remplies, l'unité de traitement 30 peut alors reprendre automatiquement l'émission du signal de commande 310 de l'électroaimant. Ce mode de fonctionnement est notamment appréciable pour la commande de moteurs situés à distance ou difficiles d'accès car cela évite l'intervention d'un opérateur localement pour ré-enclencher manuellement des appareils interrupteurs dès l'apparition d'un simple défaut thermique. Si le défaut thermique réapparaît, l'unité de traitement 30 pourra alors évidemment actionner le déclencheur 42.

Un autre but de l'invention concerne la simplification de la fabrication et la facilité de la mise en oeuvre du module de commande et de protection 10.

Selon l'invention, la carte électronique 20 est agencée dans le boîtier du module de commande et de protection 10 de façon à recevoir directement les capteurs de courant 11,12,13, le bornier de contrôle 21 ainsi que les moyens de dialogue opérateur 14, sans nécessiter de liaisons annexes de connexion, comme des fils électriques. Cette disposition simplifie donc le montage et fiabilise les connexions. En référence à la figure 2, la carte électronique 20 est placée dans une position sensiblement verticale dans l'appareil interrupteur. Elle possède une face avant 20a en direction de l'avant de l'appareil interrupteur et une face arrière 20b vers l'arrière de l'appareil interrupteur. Les moyens de dialogue opérateur 14 traversent le boîtier de façon à être accessible à un opérateur situé devant l'appareil interrupteur et sont directement fixés, par exemple par soudage, sur la face avant 20a de la carte. Le bornier de contrôle 21 est fixé, également par soudage, sur la face arrière 20b de la carte et traverse le boîtier pour se connecter sur l'embase 50.

Les capteurs de courant 11,12,13 sont implantés de manière sensiblement perpendiculaire à la carte électronique 20, dans un plan horizontal en direction de l'arrière de l'appareil interrupteur. Cette disposition minimise les risques d'échauffement de la carte électronique par les capteurs de courant. A une extrémité avant, chaque capteur de courant 11,12,13 est connecté à la face arrière 20b de la carte électronique 20, par exemple par l'intermédiaire de deux picots soudés directement sur la carte. A une extrémité arrière, chaque capteur de courant 11,12,13 est raccordé en série par le bornier de puissance 22 commun (constitué de pinces ou de fiches) à chaque pôle des lignes de courant aval 54 de l'appareil interrupteur. Ainsi, quand le module de commande et de protection 10 est absent, les lignes de courant aval 54 sont obligatoirement ouvertes au niveau du bornier de puissance 22 et l'appareil interrupteur se trouve alors en position de sécurité de type sectionneur.

L'appareil interrupteur peut recevoir en option un additif 44 positionné sous le module de commande et de protection 10, comme indiqué en figure 2. Un connecteur de communication 24 (par exemple du type lame de pression) traversant le boîtier est directement fixé sur la carte électronique 20, et permet la communication entre le module de commande et de protection 10 et l'additif 44.

Ces différentes dispositions permettent avantageusement de simplifier au maximum les connexions entre la carte électronique 20 et son environnement extérieur en évitant notamment tout raccordement supplémentaire nécessitant des tresses ou des fils électriques.

Le module de commande et de protection 10 est conçu pour être inséré dans l'embase 50 et extrait de l'embase 50 selon une direction X horizontale d'avant en arrière. Le bornier de puissance 22 et le bornier de contrôle 21 sont tous les deux orientés vers l'arrière du boîtier du module de commande et de protection 10 selon cette même direction X. Lors de l'insertion, ils viennent se raccorder à des connecteurs complémentaires orientés vers l'avant de l'embase 50. Ces orientations augmentent la fiabilité des contacts et simplifient la mise en place du module 10 car l'effort de pression pour la connexion est effectué dans le même sens que l'effort d'insertion du module 10. De plus, l'invention prévoit que, lors de l'extraction du module de commande et de protection 10, la déconnexion du bornier de contrôle 21 est toujours réalisée avant la déconnexion du bornier de puissance 22, en particulier grâce à la longueur des fiches du bornier de puissance 22. Cela procure une fonction supplémentaire de sécurité en garantissant que les contacts mobiles 52 sont bien ouverts avant de déconnecter le bornier de puissance 22 afin d'éviter toute coupure en charge de la puissance. En effet, dès que le bornier de contrôle 21 est déconnecté, l'électroaimant de commande 41 n'est plus alimenté ce qui entraîne l'ouverture des contacts mobiles 52.

Le bouton de commande manuelle 51 est agencé de telle façon que lorsqu'il se trouve en position Arrêt, comme représenté en figure 2, il ne gêne pas l'extraction et l'insertion du module de commande et de protection 10 dans l'embase 50. Par contre, quand le bouton de commande manuelle 51 se trouve en position Marche, comme représenté en figure 3, il vient recouvrir le haut du boîtier du module de commande et de protection 10 ce qui interdit toute extraction intempestive de celui-ci, procurant une fonction supplémentaire de sécurité.

Pour faciliter une mise en oeuvre opérationnelle rapide de l'appareil interrupteur par un opérateur, les moyens de dialogue opérateur 14 comprennent un organe de sélection, de type roue codeuse, potentiomètre ou équivalent, accessible à l'opérateur en face avant du boîtier. Avantageusement, cet organe permet à l'opérateur de choisir la valeur d'un paramètre de réglage I_{R} unique, lisible en face avant du boîtier. Selon l'invention, l'unité de traitement 30 possède ensuite des moyens de calcul pour déterminer, à partir de cette valeur choisie I_{R}, les valeurs utilisées comme seuil de déclenchement de défaut thermique et comme seuil de déclenchement de défaut magnétique. La valeur du paramètre de réglage I_{R} est facile à choisir par l'opérateur car elle correspond habituellement au courant nominal plaqué sur le moteur. Elle varie entre une valeur minimum I_{Rmin} et une valeur maximum I_{Rmax} prédéterminées dans le module de commande et de protection 10 suivant son calibre.

Quand l'un des courants statoriques du moteur mesurés par les capteurs de courant 11,12,13 dépasse le seuil d'environ 15 fois la valeur maximum I_{Rmax}, alors l'unité de traitement 30 du module 10 détecte instantanément un défaut de type court-circuit. Quand l'un des courants statoriques du moteur dépasse le seuil d'environ 15 fois la valeur de réglage I_{R} pendant un temps de l'ordre de 100ms, alors l'unité de traitement 30 détecte un défaut de type surcharge magnétique. Pour la détection d'un défaut de type surcharge thermique, traditionnellement réalisée à l'aide de bilames, l'unité de traitement 30 élabore et mémorise, à partir des mesures des courants statoriques du moteur, un état thermique proportionnel au carré du courant dans les phases et représentatif de l'état thermique du moteur à protéger en fonction du courant nominal I_{R} réglé par l'opérateur. Un défaut thermique est détecté par l'unité de traitement 30 du module 10 lorsque les courants statoriques mesurés sont déséquilibrés ou lorsque l'état thermique cumulé excède une valeur qui est déterminée par une courbe de protection classique donnant le temps de déclenchement en fonction du courant, et qui est mémorisée dans l'unité de traitement 30. Des variantes de type de protection thermique peuvent être sélectionnées au niveau de la carte électronique 20 au moment de l'assemblage du module 10 (classes de protection, types de moteur).

Par ailleurs, les moyens de dialogue opérateur 14 peuvent également comprendre un bouton de test en face avant du boîtier permettant à un opérateur de simuler l'apparition d'un défaut thermique, en chargeant artificiellement l'état thermique du moteur. Pour certaines versions, on peut aussi envisager des moyens de dialogue opérateur 14 plus sophistiqués capables de visualiser des informations complémentaires en proposant notamment un écran de petite taille en face avant du boîtier.

## Revendications

1. Module de commande et de protection (10) pour un appareil interrupteur multipolaire basse tension destiné à la commande et la protection d'une charge électrique, l'appareil interrupteur comportant une embase (50) qui intègre des lignes de courant (53,54) munis de contacts fixes et mobiles, un électroaimant de commande (41) et un déclencheur (42) aptes à agir sur lesdits contacts mobiles (52) pour ouvrir ou fermer les pôles de puissance, le module de commande et de protection (10) comprenant, dans un boîtier raccordé de façon amovible à l'embase (50) :
- des capteurs de courant (11,12,13) mesurant l'intensité du courant traversant lesdites lignes de courant (54),
- une carte électronique (20) dotée d'une unité de traitement (30) et comportant un dispositif électronique de commande (31) et un dispositif électronique de protection (32) chargés d'actionner respectivement, au travers d'un bornier de contrôle (21), l'électroaimant de commande (41) et le déclencheur (42) en réponse respectivement à un signal de commande (310) et à un signal de déclenchement (320) émis par l'unité de traitement (30),
**caractérisé par le fait que** l'unité de traitement (30) est susceptible de supprimer le signal de commande (310) de l'électroaimant (41) en cas de dysfonctionnement du dispositif de protection (32).

2. Module de commande et de protection selon la revendication 1, dans lequel le dispositif électronique de protection (32) comprend des moyens de stockage d'énergie (34) permettant de stocker une énergie électrique au moins égale à un niveau suffisant pour actionner le déclencheur (42), **caractérisé par le fait que** l'unité de traitement (30) supprime le signal de commande (310) de l'électroaimant (41) quand l'énergie électrique stockée dans les moyens de stockage (34) est inférieure audit niveau.

3. Module de commande et de protection selon la revendication 2, **caractérisé par le fait que** l'unité de traitement (30) vérifie que l'énergie électrique stockée dans les moyens de stockage (34) est supérieure ou égale audit niveau suffisant pour actionner le déclencheur (42), avant d'émettre un signal de commande (310).

4. Module de commande et de protection selon la revendication 1, **caractérisé par le fait que** l'unité de traitement (30) supprime le signal de commande (310) de l'électroaimant (41) quand un défaut de connexion est détecté entre le dispositif électronique de protection (32) et le déclencheur (42).

5. Module de commande et de protection selon la revendication 1, **caractérisé par le fait que**, lors de la détection d'un défaut thermique, l'unité de traitement (30) supprime le signal de commande (310) de l'électroaimant (41), sans émettre le signal de déclenchement (320) du déclencheur (42).

6. Module de commande et de protection selon la revendication 1, **caractérisé par le fait que** la carte électronique (20) est agencée de façon à recevoir directement les capteurs de courant (11,12,13), le bornier de contrôle (21) et des moyens de dialogue opérateur (14) situés sur une face avant du boîtier.

7. Module de commande et de protection selon la revendication 6, **caractérisé par le fait que** la carte électronique (20) est agencée de façon à recevoir directement un connecteur de communication (24) permettant de faire communiquer le module de commande et de protection (10) avec un additif (44) de l'appareil interrupteur.

8. Module de commande et de protection selon la revendication 6, **caractérisé par le fait que** les moyens de dialogue opérateur (14) comprennent un organe de sélection d'un paramètre de réglage (I_{R}) unique et **par le fait que** l'unité de traitement (30) possède des moyens de calcul pour déterminer, à partir dudit paramètre de réglage (I_{R}), une valeur de seuil de déclenchement sur défaut thermique et une valeur de seuil de déclenchement sur défaut magnétique.

9. Module de commande et de protection selon la revendication 1, dont les capteurs de courant (11,12,13) sont raccordés en série avec les lignes de courant de l'embase (50) par un bornier de puissance (22), **caractérisé par le fait que** le bornier de contrôle (21) et le bornier de puissance (22) sont orientés vers l'arrière du boîtier selon une même direction (X) correspondant à l'axe d'insertion et d'extraction du module (10) dans l'embase (50) de l'appareil interrupteur.

10. Module de commande et de protection selon la revendication 9, **caractérisé par le fait que**, lors de la déconnexion du module de commande et de protection (10) avec l'embase (50) de l'appareil interrupteur, le bornier de contrôle (21) est déconnecté de l'embase (50) avant le bornier de puissance (22).

11. Module de commande et de protection selon la revendication 1, **caractérisé par le fait que** dispositif électronique de commande (31) reçoit de l'embase (50) un signal d'identification (312) de l'électroaimant (41) via le bornier de contrôle (21).

12. Module de commande et de protection selon la revendication 11, **caractérisé par le fait que** le dispositif électronique de commande (31) utilise le signal d'identification (312) pour adapter la valeur de l'intensité du courant envoyé pour la commande de l'électroaimant (41).

13. Appareil électrique interrupteur multipolaire destiné à la commande et la protection d'une charge électrique, comportant une embase (50) qui intègre des lignes de courant (53,54) munis de contacts fixes et mobiles, un électroaimant de commande (41) et un déclencheur (42) aptes à agir sur lesdits contacts mobiles (52), **caractérisé par le fait que** l'embase (50) est raccordée à un module de commande et de protection (10) selon l'une des revendications précédentes.

## Patentansprüche

1. Steuer- und Schutzmodul (10) für eine multipolare Niederspannungs-Schaltervorrichtung, die für die Steuerung und den Schutz einer elektrischen Last bestimmt ist, wobei die Schaltervorrichtung eine Basis (50) umfasst, in die mit festen und beweglichen Kontakten versehene Stromleitungen (53, 54), ein Steuer-Elektromagnet (41) und ein Auslöser (42), die auf die beweglichen Kontakte (52) einwirken können, um die Leistungspole zu öffnen oder zu schließen, integriert sind, wobei das Steuer- und Schutzmodul (10) in einem mit der Basis (50) lösbar verbundenen Gehäuse Folgendes umfasst:
- Stromsensoren (11, 12, 13), die die Stärke des durch die Stromleitungen (54) fließenden Stroms messen,
- eine elektronische Karte (20), die mit einer Verarbeitungseinheit (30) versehen ist und eine elektronische Steuervorrichtung (31) sowie eine elektronische Schutzvorrichtung (32) enthält, die die Aufgabe haben, über einen Steueranschluss (21) den Steuer-Elektromagneten (41) bzw. den Auslöser (42) in Reaktion auf ein Steuersignal (310) bzw. ein Auslösesignal (320), das von der Verarbeitungseinheit (30) ausgegeben wird, zu betätigen,
**dadurch gekennzeichnet, dass** die Verarbeitungseinheit (30) das Steuersignal (310) des Elektromagneten (41) im Fall einer Fehlfunktion der Schutzvorrichtung (32) unterdrücken kann.

2. Steuer- und Schutzmodul nach Anspruch 1, wobei die elektronische Schutzvorrichtung (32) Energiespeichermittel (34) umfasst, die ermöglichen, elektrische Energie zu speichern, die wenigstens ein Niveau hat, das ausreicht, um den Auslöser (42) zu betätigen, **dadurch gekennzeichnet, dass** die Verarbeitungseinheit (30) das Steuersignal (310) des Elektromagneten (41) unterdrückt, wenn die in den Speichermitteln (34) gespeicherte Energie niedriger als dieses Niveau ist.

3. Steuer- und Schutzmodul nach Anspruch 2, **dadurch gekennzeichnet, dass** die Verarbeitungseinheit (30) verifiziert, dass die in den Speichermitteln (34) gespeicherte elektrische Energie größer oder gleich dem Niveau ist, das ausreicht, um den Auslöser (42) zu betätigen, bevor sie ein Steuersignal (310) aussendet.

4. Steuer- und Schutzmodul nach Anspruch 1, **dadurch gekennzeichnet, dass** die Verarbeitungseinheit (30) das Steuersignal (310) des Elektromagneten (41) unterdrückt, wenn ein Verbindungsfehler zwischen der elektronischen Schutzvorrichtung (32) und dem Auslöser (42) detektiert wird.

5. Steuer- und Schutzmodul nach Anspruch 1, **dadurch gekennzeichnet, dass** die Verarbeitungseinheit (30) bei der Detektion eines thermischen Fehlers das Steuersignal (310) des Elektromagneten (41) unterdrückt, ohne das Auslösesignal (320) des Auslösers (42) auszugeben.

6. Steuer- und Schutzmodul nach Anspruch 1, **dadurch gekennzeichnet, dass** die elektronische Karte (20) so beschaffen ist, dass sie die Stromsensoren (11, 12, 13), den Steueranschluss (21) und Bedienerdialogmittel (14), die sich auf einer Vorderseite des Gehäuses befinden, direkt aufnimmt.

7. Steuer- und Schutzmodul nach Anspruch 6, **dadurch gekennzeichnet, dass** die elektronische Karte (20) so beschaffen ist, dass sie einen Kommunikationsverbinder (24), der die Ausführung einer Kommunikation zwischen dem Steuer- und Schutzmodul (10) und einer Zusatzvorrichtung (44) der Schaltervorrichtung ermöglicht, direkt aufnimmt.

8. Steuer- und Schutzmodul nach Anspruch 6, **dadurch gekennzeichnet, dass** die Bedienerdialogmittel (14) ein Organ zum Auswählen eines eindeutigen Regulierungsparameters (I_{R}) umfassen und dass die Verarbeitungseinheit (30) Rechenmittel besitzt, um anhand des Regulierungsparameters (I_{R}) einen Schwellenauslösewert bei einem thermischen Fehler und einen Schwellenauslösewert bei einem magnetischen Fehler zu bestimmen.

9. Steuer- und Schutzmodul nach Anspruch 1, wobei die Stromsensoren (11, 12, 13) mit den Stromleitungen der Basis (50) durch einen Leistungsanschluss (22) in Serie geschaltet sind, **dadurch gekennzeichnet, dass** der Steueranschluss (21) und der Leistungsanschluss (22) zur Rückseite des Gehäuses in derselben Richtung (X), die der Einschub- und Entnahmeachse des Moduls (10) in die bzw. aus der Basis (50) der Schaltervorrichtung entspricht, orientiert sind.

10. Steuer- und Schutzmodul nach Anspruch 9, **dadurch gekennzeichnet, dass** bei der Trennung des Steuer- und Schutzmoduls von der Basis (50) der Schaltervorrichtung der Steueranschluss (21) von der Basis (50) vor dem Leistungsanschluss (22) getrennt wird.

11. Steuer- und Schutzmodul nach Anspruch 1, **dadurch gekennzeichnet, dass** eine elektronische Steuervorrichtung (31) von der Basis (50) ein Signal (312) für die Identifizierung des Elektromagneten (41) über den Steueranschluss (21) empfängt.

12. Steuer- und Schutzmodul nach Anspruch 11, **dadurch gekennzeichnet, dass** die elektronische Steuervorrichtung (31) das Identifizierungssignal (312) verwendet, um den Wert der Stärke des Stroms, der für die Steuerung des Elektromagneten (41) geschickt wird, anzupassen.

13. Multipolare elektrische Schaltervorrichtung, die für die Steuerung und den Schutz einer elektrischen Last bestimmt ist und eine Basis (50) umfasst, in die mit festen und beweglichen Kontakten versehene Stromleitungen (53, 54), ein Steuer-Elektromagnet (41) und ein Auslöser (42), die auf die beweglichen Kontakte (52) einwirken können, integriert sind, **dadurch gekennzeichnet, dass** die Basis (50) mit einem Steuer- und Schutzmodul (10) nach einem der vorhergehenden Ansprüche verbunden ist.

## Claims

1. Control and protection module (10) for a low voltage multipolar switch device, designed to control and protect an electrical load, said switch device comprising a base (50) fitted with current lines (53, 54) that have stationary and moving contacts, a control electromagnet (41) and a tripping element (42) capable of acting on said moving contacts (52) in order to open or break the power poles, the control and protection module comprising, in a housing attached in a detachable way to the base (50):
- current sensors (11,12,13) which measure the current flowing through said current lines (54),
- an electronic board (20) having a processing unit (30), and comprising an electronic control device (31) and an electronic protection device (32), responsible respectively for operating, by way of a control terminal block (21), the control electromagnet (41) and the tripping element (42) in response respectively to a control signal (310) and a trip signal (320) transmitted by the processing unit (30),
**characterised in that** the processing unit (30) can suppress the control signal (310) of the electromagnet (41) in case of malfunction of the protection device (32).

2. Control and protection module according to claim 1, in which the electronic protection device (32) has energy storage means (34) enabling the storage of electrical energy at least equal to a level required for operating the tripping element (42), **characterised in that** the processing unit (30) suppresses the control signal (310) of the electromagnet (41) when the electrical energy stored in the storage means (34) is below said level.

3. Control and protection module according to claim 2, **characterised in that** the processing unit (30) checks that the electrical energy stored in the storage means (34) is greater than or equal to said level required for operating the tripping element (42), before sending a control signal (310).

4. Control and protection module according to claim 1, **characterised in that** the processing unit (30) suppresses the control signal (310) of the electromagnet (41) when a connection fault is detected between the electronic protection device (32) and the tripping element (42).

5. Control and protection module according to claim 1, **characterised in that** when a thermal fault is detected, the processing unit (30) is capable of suppressing the control signal (310) of the electromagnet (41) without sending the trip signal (320) of the tripping element (42).

6. Control and protection module according to claim 1, **characterised in that** the electronic board (20) is arranged to directly receive the current sensors (11,12,13), the control terminal block (21) and operator interface means (14) situated on a front side of the housing.

7. Control and protection module according to claim 6, **characterised in that** the electronic board (20) is arranged to directly receive a communication connector (24) enabling the control and protection module (10) to communicate with an auxiliary block (44) of the switch device.

8. Control and protection module according to claim 6, **characterised in that** the operator interface means (14) comprise a selection unit of a unique parameter setting (I_{R}) and **in that** the processing unit (30) has calculation means to determine, from said parameter setting (I_{R}), a thermal fault trip threshold value and a magnetic fault trip threshold value.

9. Control and protection module according to claim 1, wherein the current sensors (11,12,13) are connected in series with the current lines of the base (50) by a power supply terminal (22), **characterised in that** the control terminal block (21) and the power supply terminal (22) are facing towards the back of the housing in a same direction (X) which corresponds to the insertion and removal module axis (10) in the base (50) of the switch device.

10. Control and protection module according to claim 9, **characterised in that** when the control and protection module (10) is disconnected from the base (50) of the switch device, the control terminal (21) is disconnected from the base (50) before the power supply terminal (22).

11. Control and protection module according to claim 1, **characterised in that** the electronic control device (31) receives from the base (50) an identification signal (312) from the electromagnet (41) via the control terminal block (21).

12. Control and protection module according to claim 11, **characterised in that** the electronic control device (31) uses the identification signal (312) to adapt the intensity of the current sent for controlling the electromagnet (41).

13. Multipolar switching device designed to control and protect an electrical load, comprising a base (50) which accommodates current lines (53,54) fitted with fixed and moving contacts, a control electromagnet (41) and a tripping element (42) capable of acting upon said moving contacts (52), **characterised in that** the base (50) is connected to a control and protection module (10) according to one of the preceding claims.
